# EUROPÄISCHE PATENTSCHRIFT

(11) **EP 2 584 222 B1**
(45) Veröffentlichungstag und Bekanntmachung des Hinweises auf die Patenterteilung: **25.02.2015**
(21) Anmeldenummer: 12185585.2
(22) Anmeldetag: 24.09.2012
(51) Int. Cl.: F16H 25/24, F16H 25/20

(54) **Linearbewegungsvorrichtung mit einer Verdrehsicherung, umfassend einen langgestreckten Gleitbelag**
Linear movement device with an anti-twist device, comprising an elongated slide lining
Dispositif de déplacement linéaire avec une sécurité anti-rotation, comprenant un revêtement de glissière allongé

(30) Priorität: 20.10.2011 DE 102011116631
(43) Veröffentlichungstag der Anmeldung: 24.04.2013
(73) Patentinhaber: ROBERT BOSCH GMBH, 70442 Stuttgart (DE)
(72) Erfinder: Keller, Bernhard, 97535 Wasserlosen (DE)
(74) Vertreter: Maiß, Harald

(56) Entgegenhaltungen:
- EP-A1- 1 035 355
- DE-A1- 10 128 251
- DE-U1- 8 032 409
- US-A- 3 081 644

## Beschreibung

Die Erfindung betrifft eine Linearbewegungsvorrichtung gemäß dem Oberbegriff von Anspruch 1.

Aus der EP 0 767 526 B 1 ist eine Linearbewegungsvorrichtung in Form eines Elektrozylinders bekannt. Gemäß der Fig. 3 der EP 0 767 526 B 1 umfasst die Linearbewegungsvorrichtung 10 ein Gehäuse 12 und einen Ausleger 30, der aus dem Gehäuse herausragt. Dabei sind das Gehäuse und der Ausleger in Form eines Hohlzylinders ausgebildet, wobei der Ausleger in der Durchgangsbohrung 11 des Gehäuses aufgenommen ist, wobei er bezüglich einer Längsachse beweglich in dem Gehäuse gelagert ist.

Der Ausleger kann mittels eines Gewindetriebs in Bewegung versetzt werden. Der Gewindetrieb umfasst eine bezüglich der Längsachse drehbar gelagerte Gewindespindel 24, die an ihrer Außenumfangsfläche mit schraubenförmig verlaufenden Gewindegängen 22 versehen ist. In die Gewindegänge greift eine angepasste Gewindemutter 28 ein, die vorliegend einstückig mit dem Ausleger ausgebildet ist. Es sind jedoch auch Elektrozylinder bekannt, bei denen die Gewindemutter in Form einer gesonderten Mutter mit endlos umlaufenden, kugelförmigen Wälzkörpern ausgebildet ist, wobei die Mutter fest mit einem Ende des Auslegers verbunden ist. Die Gewindespindel kann von einem Elektromotor 20 in Drehbewegung versetzt werden, welcher vorliegend unmittelbar an die Gewindespindel angekuppelt ist. Zwischen dem Elektromotor und der Gewindespindel kann jedoch auch ein Getriebe, beispielsweise ein Riemen- oder ein Zahnradgetriebe, vorgesehen sein.

Weiter ist eine Verdrehsicherung vorgesehen, welche das Drehmoment abstützt, welches der Elektromotor auf die Gewindespindel ausübt, so dass sich der Ausleger bezüglich der Längsachse nicht gegenüber dem Gehäuse verdrehen kann. Hierfür ist der Ausleger im Wesentlichen über seine gesamte Länge mit einer Vielkeilverzahnung ausgestattet. Das Gehäuse greift wiederum mit dem Teil 36 formschlüssig in die Vielkeilverzahnung ein.

Anstelle der Vielkeilverzahnung sind auch andere von der Kreisform abweichende Querschnittsformen des Auslegers bekannt. So sind beim Ausleger der FR 2587690 A1 an einem anfänglich kreisrunden Hohlrohr drei Abflachungen vorgesehen worden.

Der Nachteil der Verdrehsicherung gemäß der EP 0 767 526 B 1 besteht in der aufwändigen Herstellung der vielen Nuten der Vielkeilverzahnung. Die Vielkeilverzahnung hat jedoch den Vorteil, dass in Summe eine sehr große Eingreifsfläche vorhanden ist. Diese ist darüber hinaus im Wesentlichen senkrecht zu den wirkenden Kräften ausgerichtet. Der Verschleiß ist dementsprechend gering. Der Ausleger der FR 2587690 A1 ist demgegenüber wesentlich einfacher herzustellen. Zur Verschleißminimierung mussten jedoch wälzgelagerte Laufrollen vorgesehen werden, welche den formschlüssigen Eingriff zwischen Gehäuse und Ausleger bewirken. Dies ist wiederum sehr aufwändig.

Aus der DE 101 28 251 A1 ist eine Linearbewegungsvorrichtung mit den Merkmalen des Oberbegriffs von Anspruch 1 bekannt, welche Bestandteil einer Kfz-Bremse ist.

Aus der DE 101 28 251 A1 ist eine Linearbewegungsvorrichtung bekannt, welche Bestandteil einer Kfz-Bremse ist. Der Ausleger wird dabei von dem Bremskolben

Aus der EP 1 035 355 A1 und der US 3 081 644 A sind weitere Linearbewegungsvorrichtungen bekannt, welche eine Verdrehsicherung aufweisen.

Die Aufgabe der Erfindung besteht darin, eine einfach herzustellende Verdrehsicherung anzugeben, die überdies einem geringen Verschleiß unterliegt.

Diese Aufgabe wird durch die kennzeichnenden Merkmale von Anspruch 1 gelöst, wobei die Verdrehsicherung wenigstens einen gesonderten, langgestreckten Gleitbelag umfasst, der mit einer konstanten Querschnittsform ausgebildet ist, wobei der Gleitbelag im Wesentlichen spielfrei zwischen dem Gehäuse und dem Sicherungsabschnitt des Auslegers angeordnet ist, wobei er sich quer zur Längsachse erstreckt. Der gesonderte Gleitbelag kann kostengünstig aus einem Kunststoff hergestellt werden, der besonders günstige Gleiteigenschaften aufweist, wobei er eine genügend hohe Festigkeit aufweist. Hierbei ist insbesondere an die Herstellung im Extrusionsverfahren gedacht. Als Werkstoff kommt beispielsweise Polytetraflurethylen (PTFE) oder eine dieses Material enthaltende Materialmischung in Betracht. Die langgestreckte Form des Gleitbelages führt zu einer großen Berührfläche zwischen dem Ausleger und dem Gleitbelag, so dass der dort auftretende Verschleiß gering ist. Der quer zur Längsachse angeordnete Gleitbelag hat eine geringe Ausdehnung in Richtung der Längsachse, so dass der Bewegungsweg der Linearbewegungsvorrichtung durch die Verdrehsicherung nur wenig eingeschränkt wird.

In den abhängigen Ansprüchen sind vorteilhafte Weiterbildungen und Verbesserungen der Erfindung angegeben.

Die Querschnittsform des Gleitbelags kann im Wesentlichen rechteckig ausgebildet sein. Die langen Rechteckseiten bilden dabei vorzugsweise die Gleitflächen des Gleitbelags, wohingegen die kurzen Rechteckseiten in Richtung der Kraftübertragung ausgerichtet sind. Die vorgeschlagene Rechteckform besitzt eine große Gleitfläche, wobei gleichzeitig das Volumen des Gleitbelags gering ist. Es wird demzufolge nur wenig des teueren Kunststoffmaterials mit günstigen Gleiteigenschaften benötigt. Die kurze Rechteckseite ist dabei gerade so dick ausgeführt, dass der Gleitbelag eine genügend große Eigensteifigkeit aufweist und dass er sicher in dem Gehäuse gehalten wird. Durch die geringe Dicke des Gleitbelags ergibt sich eine hohe Steifigkeit der Verdrehsicherung, wobei überdies der Materialverbrauch besonders gering ist.

Der Gleitbelag kann ein erstes und ein zweites Ende aufweisen, welche sich gegenüber stehen, so dass sie einen schmalen Freiraum begrenzen. Der Gleitbelag umgibt den Ausleger daher fast vollständig. Der schmale Freiraum erlaubt dem Gleitbelag eine erwärmungsbedingte Längenänderung, ohne dass es zu einer Verspannung der Verdrehsicherung kommt. Darüber hinaus wird durch die endliche Ausgestaltung des Gleitbelags dessen Montage im Gehäuse vereinfacht. Der Gleitbelag kann den Ausleger allerdings auch endlos umgeben, wobei diese Ausführungsform aus vorstehend genannten Gründen nicht bevorzugt wird.

Es können mehrere im Wesentlichen identische Gleitbeläge vorgesehen sein, welche bezüglich der Längsachse nebeneinander angeordnet sind. Hierdurch kann die Gleitfläche zwischen dem Gleitbelag und dem Ausleger nahezu beliebig groß ausgelegt werden, ohne die Form des Gleitbelags selbst ändern zu müssen. Somit kann der gleiche Gleitbelag für unterschiedlich große Linearbewegungsvorrichtungen verwendet und in großen Mengen kostengünstig hergestellt werden. Weiter ist es bei mehreren gesonderten Gleitbelägen einfacher als bei einem einzigen großen Gleitbelag zu erreichen, dass die gesamte Gleitfläche im Wesentlichen gleichmäßig trägt.

Die genannten Freiräume können in Richtung der Längsachse betrachtet an verschiedenen Orten angeordnet sein. Im Bereich der Freiräume trägt die einzelne Verdrehsicherung nicht. Durch die versetzte Anordnung der Freiräume wird dennoch erreicht, dass der Ausleger über seinen gesamten Umfang durch wenigstens einen der mehreren Gleitbeläge abgestützt ist.

Alle Gleitbeläge können an einem gesonderten Halteteil festgelegt sein. Hierdurch wird die Montage der gesamten Linearbewegungsvorrichtung vereinfacht. Diese ist meist sehr groß und damit unhandlich. Das Halteteil ist dem gegenüber viel kleiner. Die Montage der Gleitbeläge und ggf. weiterer Anbauteile kann am Halteteil daher viel einfacher durchgeführt werden. Am Ende der Montage muss nur noch das gesamte Halteteil mit den Gleitbelägen an der verbleibenden Linearbewegungsvorrichtung befestigt werden. Weiter kann für unterschiedlich lange Linearbewegungsvorrichtungen ein identisches Halteteil verwendet werden, so dass dieses in großer Stückzahl kostengünstig hergestellt werden kann.

Es kann eine Enddichtung mit wenigstens einer den Ausleger dichtend umgebenden Dichtlippe vorgesehen sein, wobei die Enddichtung an dem Halteteil befestigt ist. Die Montage der an sich bekannten Enddichtung wird damit in der gleichen Weise vereinfacht wie jene der Gleitbeläge.

Es kann ein Abstreifer aus Schaumstoff vorgesehen sein, welcher benachbart zur Enddichtung auf der Seite des wenigstens einen Gleitbelags angeordnet ist, wobei der Abstreifer an dem Ausleger anliegt. Der Abstreifer saugt Schmierstoff, der am Anleger anhaftet auf und gibt diesen an ungeschmierte Stellen wieder an den Ausleger ab. Somit ist gewährleistet, dass der Ausleger überall dort, wo er die Gleitbeläge und die Enddichtung gleitend berührt, wenigstens mit einem dünnen Schmierfilm bedeckt ist. Somit ist der Verschleiß der Gleitbeläge und der Enddichtung gering. Der Abstreifer ist neben der Enddichtung angeordnet, weil sich dort bevorzugt Schmierstoff ansammelt, der vom Abstreifer aufgenommen werden kann.

Es kann eine langgestreckte Gewindespindel bezüglich der Längsachse drehbar in dem Gehäuse gelagert sein, wobei an einem Längsende des Auslegers eine Mutter befestigt ist, welche in Schraubeingriff mit der Gewindespindel steht. Die erfindungsgemäße Verdrehsicherung dient hauptsächlich zur Abstützung des Antriebsdrehmoments der Gewindespindel. Wäre die Verdrehsicherung nicht vorhanden, würde der Ausleger durch die Gewindespindel bezüglich der Längsachse gedreht werden. Eine Längsbewegung des Auslegers würde sich nicht einstellen.

Es kann wenigstens ein Endanschlag für die Mutter vorgesehen sein, welcher aus einem Elastomer besteht, wobei der Endanschlag an dem Halteteil befestigt ist. Ein Endanschlag für die Mutter aus einem Elastomer ist an sich bekannt. Dessen Montage an dem Halteteil lässt sich besonders leicht bewerkstelligen. Insoweit gilt das für den Gleitbelag bereits Gesagte.

Der Endanschlag kann in Form eines Hohlzylinders ausgebildet sein, welcher den Ausleger umgibt. Hierdurch ergibt sich eine besonders große Berührfläche zwischen dem Endanschlag und der Mutter, so dass der Endanschlag nur gering belastet wird, wenn die Mutter gegen den Endanschlag fährt.

Das Gehäuse kann ein kreiszylindrisches Gehäuserohr umfassen, wobei das Halteteil in Form eines Hohlzylinders ausgebildet ist, wobei das Gehäuserohr das Halteteil wenigstens abschnittsweise umgibt. Hierdurch wird das Halteteil an einer großen Anlagefläche am Gehäuserohr abgestützt, so dass dort ein großes Drehmoment von der Verdrehsicherung auf das Gehäuse übertragen werden kann. Dabei kann das Halteteil selbst mit geringen Abmessungen ausgeführt werden, ohne dass dies die Steifigkeit der Verdrehsicherung nachteilig beeinflusst.

Die Erfindung wird im Folgenden anhand der beigefügten Zeichnungen näher erläutert. Es stellt dar:
- Fig. 1: einen Längsschnitt einer erfindungsgemäßen Linearbewegungsvorrichtung;
- Fig. 2: einen vergrößerten Ausschnitt von Fig. 1 im Bereich der Verdrehsicherung;
- Fig. 3: eine perspektivische Ansicht des Halteteils;
- Fig. 4: eine perspektivische Ansicht der Gleitbeläge; der Enddichtung und des Endanschlags ohne das umgebende Halteteil; und
- Fig. 5: einen Querschnitt der Linearbewegungsvorrichtung nach Fig. 1, wobei die Schnittebene durch einen Gleitbelag verläuft.

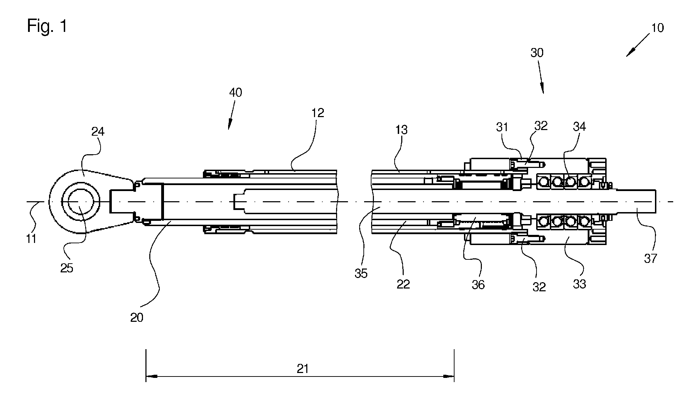

Fig. 1 zeigt einen Längsschnitt einer erfindungsgemäßen Linearbewegungsvorrichtung 10. Die Linearbewegungsvorrichtung 10 umfasst ein Gehäuse 12 und einen Ausleger 20. Das Gehäuse 12 umfasst ein Gehäuserohr 13, an dessen einem Längsende eine Verdrehsicherung 40 angebracht ist, wobei am gegenüberliegenden Längsende ein Drehlager 30 vorgesehen ist. Das Gehäuserohr 13 ist in Form eines kreisrunden Hohlzylinders ausgebildet, wobei es aus Stahl im Ziehverfahren hergestellt ist. Das Gehäuserohr 13 weist nach dem Ziehprozess bereits eine ausreichende Genauigkeit für die vorliegende Verwendung auf, so dass es nur noch örtlich nachbearbeitet wird. An dem Längsende, das dem Drehlager 30 zugeordnet ist, ist das Gehäuserohr 13 an der Außenumfangsfläche mit einem Außengewinde versehen, auf das ein Haltering 31 aufgeschraubt ist. Der Haltering 31 ist wiederum mit mehreren, parallel zur Längsachse ausgerichteten Schraubbolzen 32 mit dem Lagergehäuse 33 des Drehlagers 30 verschraubt, so dass das Lagergehäuse 33 gegen eine Längsstirnfläche des Gehäuserohres 13 gespannt wird.

Das Lagergehäuse 33 ist im Wesentlichen in Form eines kreisrunden Hohlzylinders ausgebildet. In dem Lagergehäuse 33 sind insgesamt vier Schrägkugellager 34 aufgenommen, in denen eine Gewindespindel 35 bezüglich der Längsachse 11 drehbar gelagert ist. Die Gewindespindel 35 ragt mit einem kreiszylindrischen Antriebszapfen 36 aus dem Lagergehäuse 33 heraus, so dass sie beispielsweise mit einem Elektromotor oder einem Getriebe in Drehantriebsverbindung gebracht werden kann, um den Ausleger 20 in Richtung der Längsachse 11 zu bewegen. Innerhalb des Gehäuserohres 13 ist die Gewindespindel 35 mit bezüglich der Längsachse 11 schraubenförmig verlaufenden Gewindegängen versehen. In diese Gewindegänge greift eine Mutter 37 ein, die im vorliegenden Ausführungsbeispiel als Planetenmutter ausgeführt ist, die beispielsweise gemäß der DE 10 2007 056 861 A1 ausgeführt sein kann. Es kann aber auch eine Mutter mit endlos umlaufenden Wälzkörpern oder eine Gleitgewindemutter vorgesehen sein.

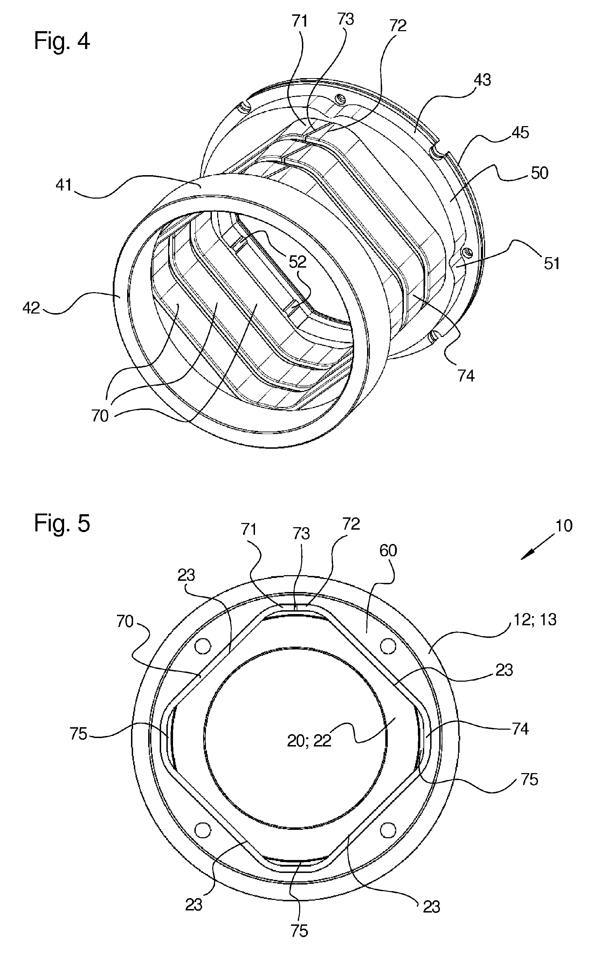

Der Ausleger 20 umfasst ein Auslegerrohr 22, das sich mit einer konstanten Querschnittsform in Richtung der Längsachse 11 erstreckt, wobei es die Gewindespindel 35 abschnittsweise umgibt. Das Ende der Gewindespindel 35, das dem Drehlager 30 abgewandt ist, ist je nach Länge der Linearbewegungsvorrichtung 10 an der Innenumfangsfläche des Auslegerrohres 22 gleitbeweglich abgestützt oder nicht. Die Innenumfangsfläche des Auslegerrohres 22 ist kreiszylindrisch ausgebildet, wobei die Außenumfangsfläche ausgehend von einem Kreiszylinder mit vier Abflachungen versehen ist, welche im Querschnitt betrachtet auf den Seiten eines Quadrates angeordnet sind. Dieser Sachverhalt wird mit Bezug auf Fig. 5 noch näher erläutert. Die Außenumfangsfläche des Auslegerrohrs 22 bildet den Sicherungsabschnitt 21 des Auslegers 20. Der Sicherungsabschnitt 21 ist der Bereich des Auslegers, der bei der Bewegung der Linearbewegungsvorrichtung 10 in Eingriff mit der Verdrehsicherung 40 gelangen kann. An dem der Mutter 37 zugewandten Ende ist das Gehäuserohr 22 an der Außenumfangsfläche mit einem Außengewinde versehen, auf welches die Mutter 37 aufgeschraubt ist. Das entsprechende Innengewinde kann wahlweise unmittelbar am Hauptkörper der Mutter 37 oder an einem gesonderten Verbindungsteil vorgesehen sein.

An dem Ende des Auslegerrohres 22, welches aus dem Gehäuse 12 herausragt, ist ein Befestigungsteil 24 vorgesehen, welches mit einem kreiszylindrischen Bolzendurchbruch 25 versehen ist. Der Bolzendurchbruch ist wahlweise fest im Befestigungsteil 24 vorgesehen oder in Form eines Kugelgelenks ausgeführt. Anstelle des Bolzendurchbruchs kann auch ein Außengewinde vorgesehen sein, dessen Mittelachse mit der Längsachse 11 der Linearbewegungsvorrichtung 10 zusammenfällt.

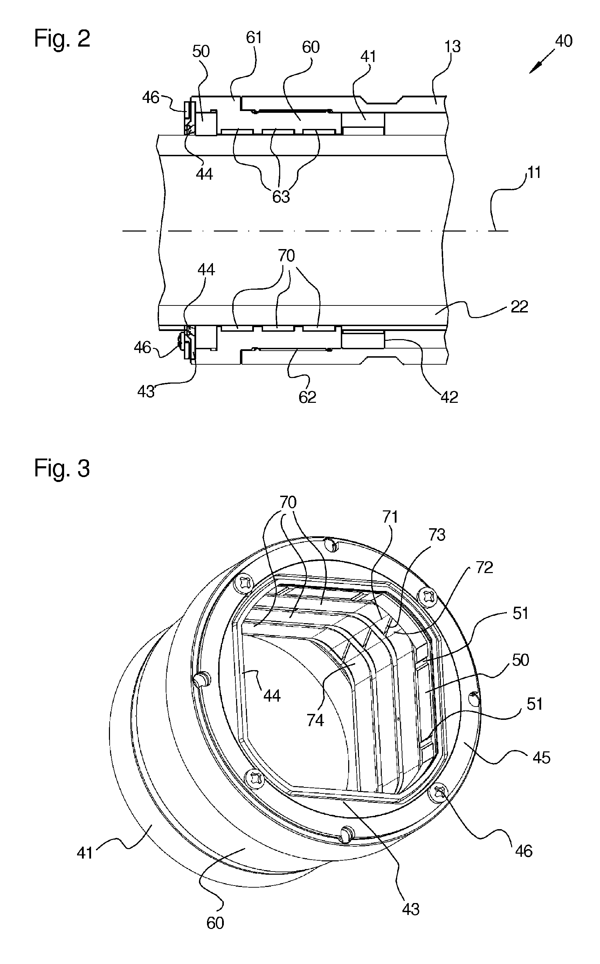

Fig. 2 zeigt einen vergrößerten Ausschnitt von Fig. 1 im Bereich der Verdrehsicherung 40. Die Verdrehsicherung 40 umfasst ein gesondertes Halteteil 60, welches im Wesentlichen in Form eines kreisrunden Hohlzylinders ausgeführt ist. An der Außenumfangsfläche des Halteteils 60 ist ein Außengewinde 62 vorgesehen, welches in ein Innengewinde an der Innenumfangsfläche des Gehäuserohres 13 eingeschraubt ist, so dass das Halteteil 60 fest mit dem Gehäuserohr 13 verbunden ist. Dabei liegt das Halteteil 60 mit einem Absatz 61 an einer zugeordneten Längsstirnfläche des Gehäuserohres 13 an. An der Innenumfangsfläche des Halteteils 60 sind drei identische Aufnahmeausnehmungen 63 vorgesehen, die bezüglich der Längsachse 11 nebeneinander angeordnet sind. Die Aufnahmeausnehmungen 63 umgeben das Auslegerrohr 22 ringartig, wobei die Gleitbeläge 70 in den Aufnahmeausnehmungen aufgenommen sind, so dass in radialer Richtung im Wesentlichen kein Spiel zum Halteteil 60 bzw. zum Auslegerrohr 22 vorhanden ist. Die Gleitbeläge 70 besitzen eine konstante rechteckige Querschnittsform, wobei die lange Rechteckseite etwa 5-mal so lang wie die kurze Rechteckseite ist. Durch die Aufnahmeausnehmungen 63 werden die Gleitbeläge 70 formschlüssig in Richtung der Längsachse 11 gehalten, so dass sie sich bei einer Bewegung des Auslegers nicht gegenüber dem Halteteil 60 verschieben.

Weiter liegt an dem Halteteil 60 ein gesonderter Endanschlag 41 aus einem Elastomer an. Der Endanschlag ist in Form eines Kreisringes ausgeführt, welcher eine konstante, rechteckige Querschnittsform aufweist. Die Außenumfangsfläche des Endanschlags 41 liegt mit geringer Vorspannung an der Innenumfangsfläche des Gehäuserohres 13 an. Eine Längsstirnfläche des Endanschlags liegt an dem Halteteil 60 an, wobei die gegenüberliegende Längsstirnfläche eine Anschlagfläche 42 bildet, welche mit der Mutter in Berührung kommen kann, wenn der Ausleger maximal weit ausgefahren ist.

Weiter ist in dem Halteteil 60 ein Abstreifer 50 aufgenommen, der mittels Wasserstrahlschneiden aus einer offenporigen Schaumstoffplatte ausgeschnitten ist. Der Abstreifer 50 wird von einer Enddichtung 43 in einer Ausnehmung des Halteteils 60 gehalten. Die Enddichtung 43 aus einem Elastomer ist insgesamt plattenförmig ausgebildet, wobei sie mit einer schräg nach außen abstehenden Dichtlippe 44 versehen ist, welche die Außenumfangsfläche des Auslegerrohres 22 dichtend berührt. Auf der Enddichtung 43 liegt ein kreisringförmiges Halteblech 45 auf, welches über mehrere Halteschrauben 46 mit dem Halteteil 60 verschraubt ist. Über das steife Halteblech 45 wird die punktuell angreifende Klemmkraft der Halteschrauben 46 über den gesamten Umfang der elastischen Enddichtung 43 verteilt.

Fig. 3 zeigt eine perspektivische Ansicht des Halteteils 60. Fig. 4 zeigt eine perspektivische Ansicht der Gleitbeläge 70; der Enddichtung 43 und des Endanschlags 41, ohne das umgebende Halteteil. Die Ansichtsrichtungen der Fig. 3 und 4 sind dabei ungefähr entgegengesetzt.

Die Gleitbeläge 70 sind jeweils in Form eines Kunststoffbandes ausgeführt, das eine konstante rechteckige Querschnittsform aufweist. Das Kunststoffband wird vorzugsweise im Extrusionsverfahren hergestellt und ist im Rohzustand gerade ausgeführt, wobei es eine hohe Biegeelastizität aufweist. Das endlos gefertigte Kunststoffband wird auf die gewünschte Länge abgeschnitten, um die Gleitbeläge zu bilden. Die gegenüberliegenden Enden 71; 72 des Kunststoffbandes sind dabei schräg abgeschnitten, wobei sich zwischen den genannten Enden im eingebauten Zustand ein Freiraum 73 ergibt. Der Freiraum ist (entgegen der Darstellung in Fig. 3 und 4) in Richtung der Längsachse betrachtet an verschiedenen Orten angeordnet. Die Gleitbeläge 70 sind in dem Halteteil 60 entlang eines Quadrates mit verrundeten Ecken 74 eingebaut, wobei der genannte Freiraum 73 jeweils in einem der verrundeten Ecken 74 angeordnet ist. Der Radius der verrundeten Ecken 74 ergibt sich aus der Biegeelastizität des Gleitbelags 70. Dabei wird angestrebt, dass im Wesentlichen ausschließlich eine elastische Verbiegung stattfindet.

Der Abstreifer 60 ist an seiner Außenumfangsfläche im Wesentlichen kreiszylindrisch ausgeführt, wobei mehrere Ausnehmungen 51 vorgesehen sind, die einen Freiraum für die Halteschrauben 46 bilden. Die Innenumfangsfläche des Abstreifers 50 ist im Wesentlichen an die Außenumfangsfläche des Auslegerrohres angepasst, wobei mehrere Nasen 52 vorgesehen sind, durch die eine definierte, geringe Anpresskraft des Abstreifers 50 an dem Auslegerrohr eingestellt wird.

Fig. 5 zeigt einen Querschnitt der Linearbewegungsvorrichtung 10 nach Fig. 1, wobei die Schnittebene durch einen Gleitbelag 70 verläuft. Zu erkennen ist insbesondere die Formabweichung zwischen der Außenumfangsfläche des Auslegerrohres 22 und dem Biegeverlauf der Gleitbeläge 70 in den Eckbereichen 74. Das Auslegerrohr 22 ist im Rohzustand in Form eines kreisrunden Hohlzylinders ausgebildet. An diesem werden insgesamt vier Abflachungen 23 mittels einer Fräsbearbeitung hergestellt. Die Abflachungen 23 verlaufen parallel zur Längsachse und sind im Querschnitt betrachtet auf einem Quadrat angeordnet. Der Gleitbelag 70 wird dagegen ausgehend von einem geraden Band in die Form eines Quadrates mit verrundeten Ecken 74 gebogen. Demnach ist in den Eckbereichen ein Abstand 75 zwischen dem Auslegerrohr 22 und den Gleitbelägen 70 vorhanden, so dass dort im Rahmen der Verdrehsicherung keine Kraftübertragung stattfindet. Im Übrigen liegen die Gleitbeläge 70 an ebenen Flächen des Auslegers 22 bzw. des Halteteils 60 im Wesentlichen spielfrei an, so dass das Auslegerrohr formschlüssig gegen Verdrehung bezüglich der Längsachse gegenüber dem Gehäuserohr 13 gesichert ist.

### Bezugszeichenliste

- 10: Linearbewegungsvorrichtung
- 11: Längsachse
- 12: Gehäuse
- 13: Gehäuserohr

- 20: Ausleger
- 21: Sicherungsabschnitt
- 22: Auslegerrohr
- 23: Abflachung am Auslegerrohr
- 24: Befestigungsteil
- 25: Bolzendurchbruch

- 30: Drehlager
- 31: Haltering
- 32: Schraubbolzen
- 33: Lagergehäuse
- 34: Schrägkugellager
- 35: Gewindespindel
- 36: Antriebszapfen
- 37: Mutter

- 40: Verdrehsicherung
- 41: Endanschlag
- 42: Anschlagfläche
- 43: Enddichtung
- 44: Dichtlippe
- 45: Halteblech
- 46: Halteschraube

- 50: Abstreifer
- 51: Ausnehmung für Halteschraube
- 52: Nase

- 60: Halteteil
- 61: Absatz
- 62: Außengewinde am Halteteil
- 63: Aufnahmeausnehmung

- 70: Gleitbelag
- 71: erstes Ende
- 72: zweites Ende
- 73: Freiraum zwischen den Enden
- 74: verrundete Ecke
- 75: Abstand zwischen Gleitbelag und Auslegerrohr

## Patentansprüche

1. Linearbewegungsvorrichtung (10) mit einem Gehäuse (12) und einem Ausleger (20), der aus dem Gehäuse (12) herausragt, wobei der Ausleger (20) bezüglich einer Längsachse (11) beweglich an dem Gehäuse (12) gelagert ist, wobei sich der Ausleger (20) in einem Sicherungsabschnitt (21) mit einer konstanten, von einer Kreisform abweichenden Außenquerschnittsform parallel zur Längsachse (11) erstreckt, wobei der Ausleger (20) ein Auslegerrohr (22) umfasst, dessen Außenumfangsfläche den Sicherungsabschnitt (21) bildet, wobei eine Verdrehsicherung (40) vorgesehen ist, welche formschlüssig in die genannte Außenquerschnittsform eingreift, so dass der Ausleger (20) gegen Verdrehung bezüglich der Längsachse (11) gegenüber dem Gehäuse (12) gesichert ist, wobei die Verdrehsicherung (40) wenigstens einen gesonderten, langgestreckten Gleitbelag (70) umfasst, der mit einer konstanten Querschnittsform ausgebildet ist, wobei der Gleitbelag (70) im Wesentlichen spielfrei zwischen dem Gehäuse (12) und dem Sicherungsabschnitt (21) des Auslegers (20) angeordnet ist, wobei er sich quer zur Längsachse (11) erstreckt,
**dadurch gekennzeichnet, dass** das Auslegerrohr (22) in Form eines kreisrunden Hohlzylinders mit vier Abflachungen (23) ausgebildet ist, wobei die Abflachungen (23) parallel zur Längsachse (11) verlaufen, wobei sie im Querschnitt betrachtet auf einem Quadrat angeordnet sind, wobei der Gleitbelag (70) in Form eines Quadrates mit verrundeten Ecken (74) gebogen ist.

2. Linearbewegungsvorrichtung nach Anspruch 1,
**dadurch gekennzeichnet, dass** die Querschnittsform des Gleitbelags (70) im Wesentlichen rechteckig ausgebildet ist.

3. Linearbewegungsvorrichtung nach einem der vorstehenden Ansprüche,
**dadurch gekennzeichnet, dass** der Gleitbelag (70) ein erstes und ein zweites Ende (71; 72) aufweist, welche sich gegenüber stehen, so dass sie einen schmalen Freiraum (73) begrenzen.

4. Linearbewegungsvorrichtung nach einem der vorstehenden Ansprüche,
**dadurch gekennzeichnet, dass** mehrere im Wesentlichen identische Gleitbeläge (70) vorgesehen sind, welche bezüglich der Längsachse (11) nebeneinander angeordnet sind.

5. Linearbewegungsvorrichtung nach Anspruch 4, rückbezogen auf Anspruch 3,
**dadurch gekennzeichnet, dass** die Freiräume (73) in Richtung der Längsachse (11) betrachtet an verschiedenen Orten angeordnet sind.

6. Linearbewegungsvorrichtung nach einem der vorstehenden Ansprüche,
**dadurch gekennzeichnet, dass** alle Gleitbeläge (70) an einem gesonderten Halteteil (60) festgelegt sind.

7. Linearbewegungsvorrichtung nach Anspruch 6,
**dadurch gekennzeichnet, dass** eine Enddichtung (43) mit wenigstens einer den Ausleger dichtend umgebenden Dichtlippe (44) vorgesehen ist, wobei die Enddichtung (43) an dem Halteteil (60) befestigt ist.

8. Linearbewegungsvorrichtung nach Anspruch 7,
**dadurch gekennzeichnet, dass** ein Abstreifer (50) aus Schaumstoff vorgesehen ist, welcher benachbart zur Enddichtung (43) auf der Seite des wenigstens einen Gleitbelags (70) angeordnet ist, wobei der Abstreifer (50) an dem Ausleger (20) anliegt.

9. Linearbewegungsvorrichtung nach einem der vorstehenden Ansprüche,
**dadurch gekennzeichnet, dass** eine langgestreckte Gewindespindel (35) bezüglich der Längsachse (11) drehbar in dem Gehäuse (12) gelagert ist, wobei an einem Längsende des Auslegers (20) eine Mutter (37) befestigt ist, welche in Schraubeingriff mit der Gewindespindel (35) steht.

10. Linearbewegungsvorrichtung nach Anspruch 9, rückbezogen auf die Ansprüche 6 bis 8,
**dadurch gekennzeichnet, dass** wenigstens ein Endanschlag (41) für die Mutter (37) vorgesehen ist, welcher aus einem Elastomer besteht, wobei der Endanschlag (41) an dem Halteteil (60) befestigt ist.

11. Linearbewegungsvorrichtung nach Anspruch 10,
**dadurch gekennzeichnet, dass** der Endanschlag (41) in Form eines Hohlzylinders ausgebildet ist, welcher den Ausleger (20) umgibt.

12. Linearbewegungsvorrichtung nach einem der Ansprüche 6 bis 11,
**dadurch gekennzeichnet, dass** das Gehäuse (12) ein kreiszylindrisches Gehäuserohr (13) umfasst, wobei das Halteteil (60) in Form eines Hohlzylinders ausgebildet ist, wobei das Gehäuserohr (13) das Halteteil (60) wenigstens abschnittsweise umgibt.

## Claims

1. Linear motion device (10) having a housing (12) and an extension arm (20), which projects from the housing (12), in which the extension arm (20) is supported on the housing (12) in such a way that it can move along a longitudinal axis (11), in which, in a securing section (21), the extension arm (20) extends parallel to the longitudinal axis (11) with a constant external cross-sectional shape deviating from a circular shape, in which the extension arm (20) comprises an extension arm tube (22), the outer circumferential surface of which forms the securing section (21), in which an anti-twist safeguard (40) is provided, which engages positively in the said external cross-sectional shape, thus securing the extension arm (20) with respect to the housing (12) against twisting relative to the longitudinal axis (11), in which the anti-twist safeguard (40) comprises at least one separate elongate anti-friction lining (70), which is formed with a constant cross-sectional shape, the anti-friction lining (70) being arranged substantially without play between the housing (12) and the securing section (21) of the extension arm (20) and extending transversely to the longitudinal axis (11), **characterized in that** the extension arm tube (22) is in the form of a circular hollow cylinder having four flats (23), in which the flats (23) extend parallel to the longitudinal axis (11), in which they are arranged on a square when viewed in cross section, in which the anti-friction lining (70) is bent into the form of a square with rounded corners (74).

2. Linear motion device according to Claim 1, **characterized in that** the cross-sectional shape of the anti-friction lining (70) is of substantially rectangular design.

3. Linear motion device according to one of the preceding claims, **characterized in that** the anti-friction lining (70) has a first and a second end (71; 72), which lie opposite one another, thereby defining a narrow free space (73).

4. Linear motion device according to one of the preceding claims, **characterized in that** a plurality of substantially identical anti-friction linings (70) are provided, which are arranged adjacent to one another along the longitudinal axis (11).

5. Linear motion device according to Claim 4, referring back to Claim 3, **characterized in that** the free spaces (73) are arranged in different locations when viewed in the direction of the longitudinal axis (11).

6. Linear motion device according to one of the preceding claims, **characterized in that** all the anti-friction linings (70) are fixed on a separate holding part (60).

7. Linear motion device according to Claim 6, **characterized in that** an end seal (43) having at least one sealing lip (44) surrounding the extension arm in a sealing manner is provided, the end seal (43) being secured on the holding part (60).

8. Linear motion device according to Claim 7, **characterized in that** a foam wiper (50) is provided, which is arranged adjacent to the end seal (43) on the side of the at least one anti-friction lining (70), the wiper (50) resting on the extension arm (20).

9. Linear motion device according to one of the preceding claims, **characterized in that** an elongate threaded spindle (35) is supported in the housing (12) in such a way that it can rotate relative to the longitudinal axis (11), a nut (37) in screw engagement with the threaded spindle (35) being secured on one longitudinal end of the extension arm (20).

10. Linear motion device according to Claim 9, referring back to Claims 6 to 8, **characterized in that** at least one end stop (41) is provided for the nut (37), said stop being composed of an elastomer, the end stop (41) being secured on the holding part (60).

11. Linear motion device according to Claim 10, **characterized in that** the end stop (41) is constructed in the form of a hollow cylinder which surrounds the extension arm (20).

12. Linear motion device according to one of Claims 6 to 11, **characterized in that** the housing (12) comprises a circular-cylindrical housing tube (13), the holding part (60) being constructed in the form of a hollow cylinder, and the housing tube (13) surrounding the holding part (60) at least in one section or sections.

## Revendications

1. Dispositif de déplacement linéaire (10) comprenant un boîtier (12) et un bras en porte-à-faux (20) qui fait saillie à partir du boîtier (12), le bras en porte-à-faux (20) étant monté sur le boîtier (12) de manière mobile par rapport à un axe longitudinal (11), le bras en porte-à-faux (20) s'étendant, dans une portion de fixation (21), parallèlement à l'axe longitudinal (11) avec une forme extérieure constante en section transversale différant d'une forme circulaire, le bras en porte-à-faux (20) comportant un tube de bras en porte-à-faux (22) dont la surface périphérique extérieure forme la portion de fixation (21), une fixation anti-rotation (40) étant prévue, laquelle vient en prise par engagement par complémentarité de formes dans ladite forme extérieure en section transversale, de telle sorte que le bras en porte-à-faux (20) soit fixé par rapport au boîtier (12) de manière à empêcher une rotation par rapport à l'axe longitudinal (11), la fixation anti-rotation (40) comportant au moins une garniture de glissement allongée séparée (70) qui est réalisée de manière à présenter une forme constante en section transversale, la garniture de glissement (70) étant disposée essentiellement sans jeu entre le boîtier (12) et la portion de fixation (21) du bras en porte-à-faux (20), la garniture de glissement s'étendant transversalement à l'axe longitudinal (11),
**caractérisé en ce que** le tube de bras en porte-à-faux (22) est réalisé sous la forme d'un cylindre creux circulaire présentant quatre méplats (23), les méplats (23) s'étendant parallèlement à l'axe longitudinal (11), les méplats étant, considérés en section transversale, disposés sur un carré, la garniture de glissement (70) étant courbée sous la forme d'un carré présentant des coins arrondis (74).

2. Dispositif de déplacement linéaire selon la revendication 1,
**caractérisé en ce que** la forme en section transversale de la garniture de glissement (70) est réalisée de manière essentiellement rectangulaire.

3. Dispositif de déplacement linéaire selon l'une quelconque des revendications précédentes,
**caractérisé en ce que** la garniture de glissement (70) comprend une première et une deuxième extrémité (71 ; 72), lesquelles sont en regard l'une de l'autre, de telle sorte qu'elles délimitent un espace libre étroit (73).

4. Dispositif de déplacement linéaire selon l'une quelconque des revendications précédentes,
**caractérisé en ce que** plusieurs garnitures de glissement (70) essentiellement identiques sont prévues, lesquelles sont juxtaposées par rapport à l'axe longitudinal (11).

5. Dispositif de déplacement linéaire selon la revendication 4, rapportée à la revendication 3,
**caractérisé en ce que** les espaces libres (73) sont, considérés dans la direction de l'axe longitudinal (11), disposés en différents emplacements.

6. Dispositif de déplacement linéaire selon l'une quelconque des revendications précédentes,
**caractérisé en ce que** toutes les garnitures de glissement (70) sont fixées à une partie de retenue séparée (60).

7. Dispositif de déplacement linéaire selon la revendication 6,
**caractérisé en ce qu'**un joint d'étanchéité d'extrémité (43) est pourvu d'au moins une lèvre d'étanchéité (44) entourant de manière étanche le bras en porte-à-faux, le joint d'étanchéité d'extrémité (43) étant fixé à la partie de retenue (60).

8. Dispositif de déplacement linéaire selon la revendication 7,
**caractérisé en ce qu'**un élément de raclage (50) en mousse est prévu, lequel est disposé à proximité du joint d'étanchéité d'extrémité (43) sur le côté de l'au moins une garniture de glissement (70), l'élément de raclage (50) s'appliquant contre le bras en porte-à-faux (20).

9. Dispositif de déplacement linéaire selon l'une quelconque des revendications précédentes,
**caractérisé en ce qu'**une broche filetée allongée (35) est montée dans le boîtier (12) de manière à pouvoir tourner par rapport à l'axe longitudinal (11), un écrou (37) étant fixé à une extrémité longitudinale du bras en porte-à-faux (20), lequel écrou est en prise par vissage avec la broche filetée (35).

10. Dispositif de déplacement linéaire selon la revendication 9, rapportée aux revendications 6 à 8,
**caractérisé en ce qu'**au moins une butée de fin de course (41) pour l'écrou (37) est prévue, laquelle est constituée d'un élastomère, la butée de fin de course (41) étant fixée à la partie de retenue (60).

11. Dispositif de déplacement linéaire selon la revendication 10,
**caractérisé en ce que** la butée de fin de course (41) est réalisée sous la forme d'un cylindre creux, lequel entoure le bras en porte-à-faux (20).

12. Dispositif de déplacement linéaire selon l'une quelconque des revendications 6 à 11,
**caractérisé en ce que** le boîtier (12) comporte un tube de boîtier (13) cylindrique circulaire, la partie de retenue (60) étant réalisée sous la forme d'un cylindre creux, le tube de boîtier (13) entourant au moins en partie la partie de retenue (60).
